# EUROPÄISCHE PATENTSCHRIFT

(11) **EP 1 533 053 B1**
(45) Veröffentlichungstag und Bekanntmachung des Hinweises auf die Patenterteilung: **06.09.2006**
(21) Anmeldenummer: 03026797.5
(22) Anmeldetag: 22.11.2003
(51) Int. Cl.: B21F 35/00, F16F 1/04

(54) **Verfahren zur Herstellung einer gekrümmten Spiralfeder und Vorrichtung zur Durchführung des Verfahrens**
Method for manufacturing a curved helical spring and device for carrying out this method
Procédé de fabrication d'un ressort hélicoidal courbé et dispositif pour la mise en oeuvre du procédé

(43) Veröffentlichungstag der Anmeldung: 25.05.2005
(73) Patentinhaber: Schroer, Bernt, Dr., 33442 Herzebrock-Clarholz (DE)
(72) Erfinder: Schroer, Bernt, Dr., 33442 Herzebrock-Clarholz (DE)
(74) Vertreter: Rehberg Hüppe + Partner

(56) Entgegenhaltungen:
- EP-B- 0 830 462
- DE-A- 3 006 913
- US-A- 2 078 828
- US-A- 3 009 490
- US-A- 3 137 325
- US-A- 3 186 272
- US-A- 5 442 945
- US-A- 5 868 996

## Beschreibung

Die Erfindung betrifft ein Verfahren zur Herstellung einer eine definiert gekrümmte Federachse aufweisenden Spiralfeder mit den Merkmalen des Oberbegriffs des Patentanspruchs 1 und eine Vorrichtung zur Durchführung des Verfahrens mit den Merkmalen des Oberbegriffs des Patentanspruchs 8.

### STAND DER TECHNIK

Ein Verfahren zur Herstellung einer eine definiert gekrümmte Federachse aufweisenden Spiralfeder mit den Merkmalen des Oberbegriffs des Patentanspruchs 1 ist aus der EP 0 830 462 B1 bekannt und als Stand der Technik zu der dortigen Erfindung beschrieben. Eine Vorrichtung mit den Merkmalen des Oberbegriffs von Anspruch 8 ist aus Dokument US-A-3 009 490 bekannt. In der Praxis dieses auch als Keilbiegen bekannten Verfahrens wird die Vorform nach ihrem Winden und vor dem Krümmen ihrer Federachse einer Wärmebehandlung unterzogen, und ihre Enden werden senkrecht' zu der Federachse plan geschliffen. Beim Krümmen ihrer Federachse wird der Formkeil aus der entgegengesetzten Richtung zu der gewünschten Krümmung auf immer die gleiche Eindringtiefe zwischen die Windungen der Vorform eingepresst. Hiervon ausgenommen sind die Federenden, an denen die Vorform typischerweise eine geringere Steigung aufweist und häufig sogar auf Block gewickelt ist. In diesen Bereichen geringer Steigung wird der Formkeil nicht zwischen die Windungen der Vorform eingepresst, um eine übermäßige Deformation der Vorform zu vermeiden. An das Keilbiegen schließt sich eine weitere Wärmebehandlung an, um beim Aufbiegen der Windungen mit dem Formkeil aufgebaute übermäßige Eigenspannungen in dem Federstahldraht abzubauen. Die Krümmung der Federachse der Vorform kann dabei etwas zurückgehen. Wenn unter Anwendung des bekannten Verfahrens eine Bogenfeder, d.h. eine Spiralfeder mit kreisbogenförmig gekrümmter Federachse hergestellt werden soll, stellt sich heraus, dass die Krümmung der Federachse an den Federenden von der Kreisbogenform abweicht, da der Formkeil hier bewusst nicht zwischen die Windungen mit der geringeren Endsteigung eingepresst wurde. Dies macht sich insbesondere in der Form bemerkbar, dass die plan geschliffenen Federenden nicht exakt senkrecht zu dem gewünschten Kreisbogen der Federachse verlaufen. Eine gewisse Kompensation der ungekrümmten Federenden ist zwar durch eine stärkere Krümmung der Federachse im Mittelbereich der Vorform möglich, führt aber auch nicht zu ideal kreisbogenförmigen Spiralfedern.

Bei einem Verfahren zur Herstellung einer eine definiert gekrümmte Federachse aufweisenden Spiralfeder, das Gegenstand der EP 0 830 462 B1 ist, wird eine Vorform nach dem Winden und Planschleifen ihrer Enden ohne eine vorherige Wärmebehandlung dreidimensional verformt und während einer anschließenden Wärmebehandlung in dieser dreidimensionalen Form gehalten. Beim Freigeben der Vorform nach der Wärmebehandlung soll die resultierende Spiralfeder eine Bogenform mit einer in einer Ebene kreisbogenförmig gekrümmten Federachse aufweisen. Bei diesem Verfahren stellt sich als nachteilig heraus, dass die Vorform mit ihren beiden Enden unter großem Kraftaufwand auf eine Haltevorrichtung aufgespannt werden muss, um ihr vor der Wärmebehandlung die notwendige dreidimensional gekrümmte Form zu geben. Überdies muss auch die Haltevorrichtung die Wärmebehandlung durchlaufen, was einen zusätzlichen Energieverbrauch bei der Wärmebehandlung bedeutet. Die nach dem bekannten Verfahren hergestellten Bogenfedern weisen zudem ebenfalls eine Abweichung von der idealen Kreisbogenform im Bereich ihrer Federenden auf. Dies ist darauf zurückzuführen, dass die mit der jeweiligen Haltevorrichtung auf die Vorform aufgebrachte Kraft, die sie dreidimensional verformt, nicht gleichmäßig auch auf die Enden der Vorform einwirkt.

### AUFGABE DER ERFINDUNG

Der Erfindung liegt die Aufgabe zugrunde, ein Verfahren zur Herstellung einer eine definiert gekrümmte Federachse aufweisenden Spiralfeder mit den Merkmalen des Oberbegriffs des Patentanspruchs 1 aufzuzeigen, mit dem die Nachteile des Stands der Technik beseitigt werden können. Insbesondere soll es möglich sein, eine Spiralfeder mit soweit kreisbogenförmig verlaufender Federachse auszubilden, dass deren Federenden exakt senkrecht zu dem gewünschten kreisbogenförmigen Verlauf der Federachse ausgerichtet sind. Weiterhin soll eine Vorrichtung zur Durchführung eines solchen Verfahrens aufgezeigt werden.

### LÖSUNG

Die Aufgabe der Erfindung wird durch ein Verfahren mit den Merkmalen des Patentanspruchs 1 und eine Vorrichtung mit den Merkmalen des Patentanspruchs 8 gelöst. Vorteilhafte Ausführungsformen des Verfahrens sind in den Unteransprüchen 2 bis 7 beschrieben. Die Unteransprüche 9 und 11 beschreiben vorteilhafte Ausführungsformen der Vorrichtung.

### BESCHREIBUNG DER ERFINDUNG

Bei dem neuen Verfahren wird eine Eindringtiefe des Formkeils zwischen die benachbarten Windungen der Vorform entlang deren Federachse unterschiedlich tief gewählt. D.h., die Eindringtiefe des Formkeils wird äls Variable für die Formgebung der Federachse verwendet. So kann beispielsweise die Eindringtiefe des Formkeils vor den Enden der Vorform größer gewählt werden als in ihrem Mittelbereich. Hierdurch kann eine fehlende Krümmung der Vorform im Bereich ihrer auf Block anliegenden Endwindungen lokal kompensiert werden. Die Abweichungen von der idealen Kreisbogenform sind dann bereits geringer als im Stand der Technik. Bei dem neuen Verfahren ist es aber auch möglich, den Formkeil zwischen die Endwindungen der Vorform mit verringerter Steigung einzupressen, um auch in diesem Bereich für eine Krümmung der Federachse zu sorgen. Hierbei ist dann die Eindringtiefe des Formkeils zwischen die Windungen kleiner, zum Teil sogar sehr viel kleiner zu wählen als im Mittelbereich der Vorform, wo die Windungen eine größere Steigung aufweisen.

Um den Formkeil an unterschiedliche Steigungen von Windungen einer Vorform anpassen zu können, ist der Formkeil relativ zu der Vorform um seine Einpressrichtung gezielt verdrehbar, so dass sich seine Orientierung zu der Federachse der Vorform entlang deren Federachse ändert. Wenn es hierbei nur um die Anpassung der Stellung des Formkeils an unterschiedliche Steigungen der Vorform geht; ist auch eine passive Verdrehbarkeit des Formkeils um seine Einpressrichtung ausreichend. Die aktive Verdrehung des Formkeils um seine Einpressrichtung kann aber auch als zusätzliche Variable bei der willkürlichen Krümmung der Federachse der Vorform eingesetzt werden, d.h. beispielsweise auch bei gleichbleibender Steigung der Windungen der Vorform unterschiedlich gewählt werden. In jedem Fall resultiert eine Verdrehung des Formkeils um seine Einpressrichtung in einen unterschiedlichen Winkel zwischen der Schneide des Formkeils und der Federachse der Vorform.

Als weiterer Parameter kann beim Krümmen der Federachse der Vorform bei dem neuen Verfahren eine Verdrehung der Vorform relativ zu dem Formkeil um ihre Federachse vorgesehen sein. Hierdurch ändert sich die Einpressrichtung, unter der der Formkeil zwischen die Windungen der Vorform eingepresst wird, entlang deren Federachse. Bei einer gleichbleibenden Steigung der Windung der Vorform ist das Resultat eine dreidimensionale Krümmung ihrer Federachse. Bei unterschiedlichen Steigungen der Vorform kann das Verdrehen der Vorform um ihre Federachse allein zu dem Zweck notwendig sein, deren Federachse in einer Ebene gezielt zu krümmen.

Als Maßnahme, um die Reproduzierbarkeit des neuen Verfahrens zu optimieren, kann vorgesehen sein, die Einpressrichtung, unter der der Formkeil zwischen die Windungen der Vorform eingepresst wird, relativ zu dem Drahtende des Federstahldrahts an dem Ende zu definieren, an dem die Vorform während des Einpressens des Formkeils gehalten wird. Bei der Verwendung des Drahtendes des Federstahldrahts als Ursprung ist auch die Lage des zu dem Formkeil zeigenden Teils jeder Federwindung längs der Federachse definiert.

Unter Anwendung des neuen Verfahrens ist es möglich, die Federachse der Vorform derart zu krümmen, dass die Federachse bei einer anschließenden Wärmebehandlung ohne Einwirkung äußerer Kräfte die gewünschte definierte Krümmung der Spiralfeder einnimmt. Hierbei geht es insbesondere um Ausführungsformen des neuen Verfahrens, bei denen keine Wärmebehandlung nach dem Winden oder Wickeln der Vorform und vor ihrem Keilbiegen erfolgt. D.h., der gesamte Abbau von übermäßigen Eigenspannungen, die während des Windens bzw. Wickelns der Vorform und des Krümmens der Federachse der Vorform aufgebaut wurden, erfolgt in der einen abschließenden Wärmebehandlung. Hieraus resultieren vergleichsweise massive Deformationen der gekrümmten Federachse der Vorform. Mit dem neuen Verfahren können diese Deformationen aber im Vorhinein kompensiert werden, so dass das Ergebnis der Wärmebehandlung eine Spiralfeder mit der gewünschten definierten Krümmung Ihrer Federachse ist. Insbesondere kann auf diese Weise eine Spiralfeder mit einer ebenen Kreisbogenform von definiertem Radius mit nur einer Eigenspannungen abbauenden Wärmebehandlung nach dem Winden bzw. Wickeln der Vorform der Spiralfeder hergestellt werden. Die hierzu einzustellende Krümmung der Vorform vor der Wärmebehandlung ist dreidimensional, d.h. sie verläuft nicht nur in einer einzigen Ebene. Wenn hier von nur einer Wärmebehandlung nach dem Winden bzw. Wickeln der Vorform der Spiralfeder bei bevorzugten Ausführungsformen der Erfindung die Rede ist, soll hierdurch ein zusätzliches abschließendes Warmsetzen der gekrümmten Feder, die ihre Gestalt endgültig festlegt, nicht ausgeschlossen sein.

Eine erfindungsgemäße Vorrichtung zur Durchführung des neuen Verfahrens, weist die Merkmale von Anspruch 8 auf.

Weiterhin ist der Formkeil der neuen Vorrichtung vorzugsweise mit einem Drehantrieb hubweise um seine Einpressrichtung verdrehbar. Wie bereits im Zusammenhang mit dem neuen Verfahren ausgeführt wurde, kann aber auch eine passive Verdrehbarkeit des Formkeils um seine Einpressrichtung gegeben sein.

Weiterhin ist es bei der neuen Vorrichtung bevorzugt, wenn die Spanneinrichtung der Vorschubeinrichtung mit einem Drehantrieb hubweise um die Federachse der Vorform verdrehbar ist. Eine passive Verdrehbarkeit stellt hier keine Alternative dar.

Die Spanneinrichtung der neuen Vorrichtung ist vorzugsweise so ausgebildet, dass sie die Vorform anhand der Lage des Drahtendes an ihrem fixierten Ende um ihre Federachse ausrichtet.

Auch sollte die Vorschubeinrichtung der neuen Vorrichtung einen speziellen Aufbau auf weisen, weil sie in der Lage sein sollte, die Vorform mit unterschiedlicher Schrittweise entlang deren Federachse vorzuschieben, damit der Formkeil beispielsweise auch bei lokal unterschiedlichen Steigungen der Vorform bei jedem Hub zwischen die beiden aktuell angepeilten Windungen trifft.

### KURZBESCHREIBUNG DER FIGUREN

Im Folgenden wird die Erfindung anhand eines in den Figuren dargestellten bevorzugten Ausführungsbeispiels weiter erläutert und beschrieben.
- **Fig. 1**: zeigt eine perspektivische Ansicht einer Anordnung zur Durchführung des neuen Verfahrens bzw. der wesentlichen Bestandteile der neuen Vorrichtung.
- **Fig. 2**: zeigt eine Seitenansicht der Anordnung gemäß Fig. 1 mit zusätzlicher Darstellung eines Widerlagers für die bearbeitete Vorform.
- **Fig.3**: zeigt die Anordnung gemäß den Fig. 1 und 2 in einer anderen Funktionsstellung mit zwischen die Windungen der Vorform eingreifendem Formkeil; und
- **Fig. 4**: zeigt die Anordnung gemäß den Fig. 1 bis 3 in einer Ansicht von oben.

### FIGURENBESCHREIBUNG

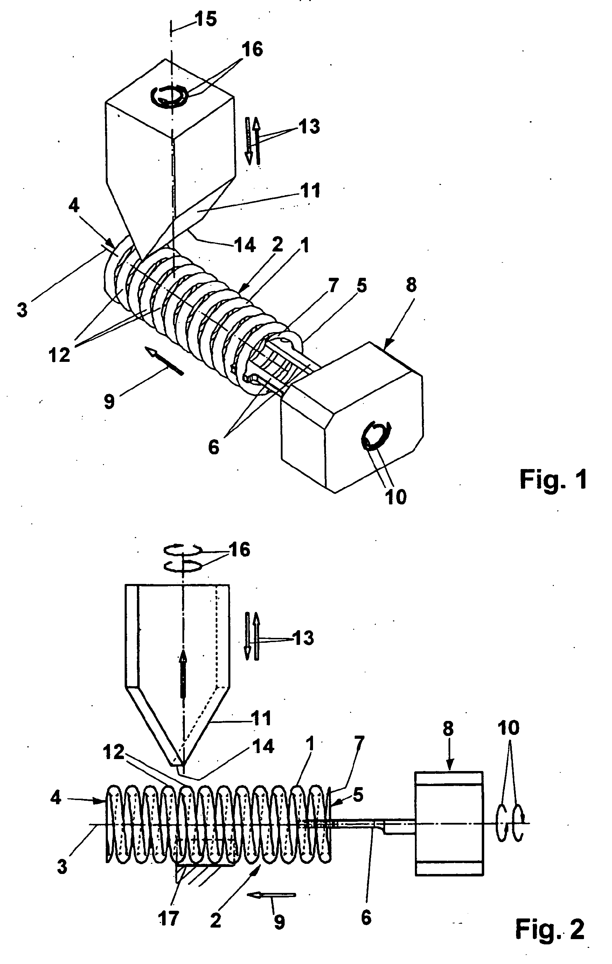

**Fig. 1** zeigt eine aus Federstahldraht 1 spiralförmig gewundene Vorform 2 mit gerader Federachse 3 für die Herstellung einer Spiralfeder mit definiert gekrümmter Federachse. Die Vorform 2 ist an ihren Enden 4 und 5 plan geschliffen. An ihrem Ende 5 wird die Vorform 2 von einer Spanneinrichtung 6 gehalten, wobei sich ein Drahtende 7 des Federstahldrahts 2 an dem Ende 5 in einer definierten Drehstellung um die Federachse 3 befindet. Die Spanneinrichtung 6 ist Teil einer Vorschubeinrichtung 8 für die Vorform 2, mit der die Vorform 2 in Richtung ihrer Federachse 3 schrittweise definiert verfahrbar ist. Dies ist durch einen Pfeil 9 hervorgehoben. Darüber hinaus ist die Spanneinrichtung 6 um die Federachse 3 gegenüber dem Rest der Vorschubeinrichtung 8 definiert verdrehbar, was durch gegenläufige Drehpfeile 10 angedeutet ist. Die Vorschubeinrichtung 8 dient zum definierten Positionieren der Vorform 2 gegenüber einem Formkeil 11, der zwischen die Windungen 12 des Federstahldrahts 1 der Vorform 2 einpressbar ist. Die Hubbewegung des Formkeils 11 ist durch gegenläufige Pfeile 13 angedeutet. Die Einpresstiefe des Formkeils 11 zwischen die Windungen 12 ist hubweise einstellbar. Darüber hinaus ist die Drehstellung des Formkeils 11, d.h. seiner Schneide 14, um seine Einpressrichtung 15 gezielt veränderbar. Auch die Drehstellung des Formkeils 11 um seine Einpressrichtung 15 ist hubweise veränderbar. Gegenläufige Drehpfeile 16 weisen auf diese Einstellmöglichkeit des Formkeils 11 hin. Beim Krümmen der Federachse 3 der Vorform 2 mit der Anordnung gemäß Fig. 1 ist es daher möglich, die Drehstellung der Vorform 2 um ihre Federachse 3, die Einpresstiefe des Formkeils 11 zwischen die Windungen 12 der Vorform 2 und die Drehstellung des Formkeils 11 um seine Einpressrichtung 15 für jeden Hub des Formkeils 11 unterschiedlich zu wählen, während die Vorform 2 entlang ihrer Federachse 3 unter dem Formkeil 11 vorgeschoben wird.

Fig. 2 zeigt zusätzlich zu den Details gemäß Fig. 1 ein Widerlager 17 für die Vorform 2, das diese gegenüber dem Formkeil 11 bei dessen Eindringen zwischen die Windungen 12 abstützt. Das Widerlager 17 ist rinnenförmig, um die Vorform 2 in ihrem Bereich zwischen dem Formkeil 11 und der Spanneinrichtung 6 auch gegenüber einem ungewollten Verdrehen um die Einpressrichtung 15 des Formkeils 11 abzustützen.

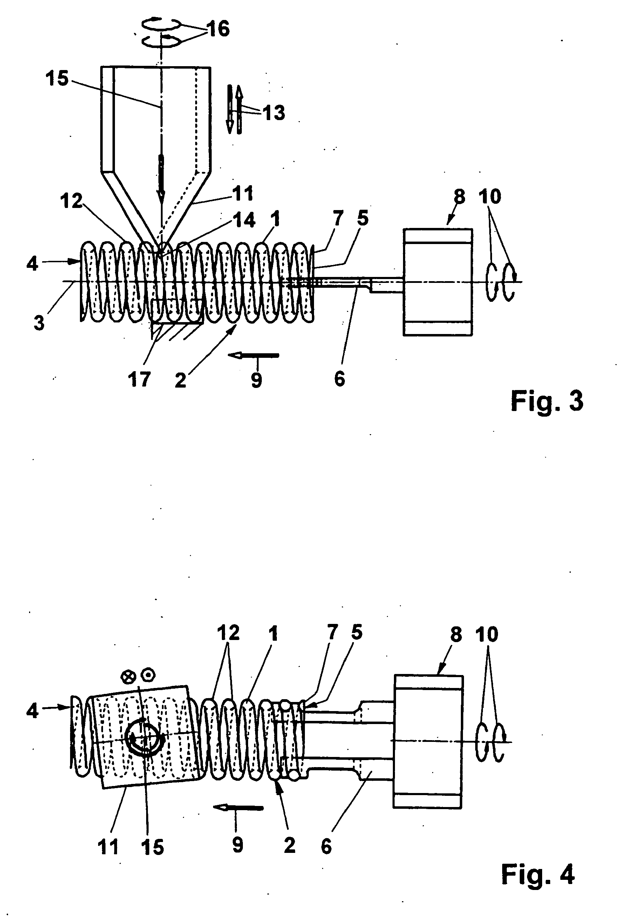

Während Fig. 2 den Formkeil 11 noch oberhalb der Vorform 2 zeigt, ist er in Fig. 3 bereits in der Einpressrichtung 15 zwischen zwei Windungen 12 eingetreten. Das weitere Einpressen des Formkeils 11 zwischen diese Windungen 12 wird dazu führen, dass das freie Ende 4 der Vorform 2 nach unten abgebogen wird. Wenn derartige Biegungen zwischen verschiedenen Windungen 12 der Vorform 2 im plastischen Bereich des Federstahldrahts 1 verursacht werden, wird die Federachse 3 schrittweise dauerhaft gekrümmt. Wenn der Formkeil 11 zwischen alle Windungen 12 eintritt, ist diese Krümmung der Federachse 3 so kontinuierlich, wie sie bei einer Spiralfeder sein kann.

Fig. 4 zeigt die Anordnung der Fig. 1 bis 3 von oben, von wo zwischen den Stellungen des Formkeils 11 gemäß Fig. 2 und Fig. 3 nicht zu unterscheiden ist.

Bei einer konkreten und besonders bevorzugten Ausführungsform des neuen Verfahrens wird mit der Anordnung gemäß den Fig. 1 bis 4 eine aus dem Federstahldraht 1 gewundene, an ihren Enden 4 und 5 plangeschliffen aber noch nicht wärmebehandelte Vorform 2 bezüglich ihrer Federachse 3 derart definiert dreidimensional gekrümmt, dass sie bei einer anschließenden Wärmebehandlung, die übermäßige Eigenspannungen aufgrund des Windens und Krümmens der Vorform 2 abbauen soll, ohne Einwirkung äußerer Kräfte auf die Vorform 2 eine ebene Kreisbogenform erhält. D.h., das Ergebnis des Verfahrens ist dann eine Spiralfeder mit in der Ebene kreisbogenförmig gekrümmter Federachse, deren Federenden exakt auf den Mittelpunkt des Kreisbogens ausgerichtet sind und senkrecht zu der von dem Kreisbogen definierten Ebene verlaufen. Diese Spiralfeder kann im Rahmen ihrer Endbearbeitung zusätzlich warmgesetzt werden, wobei es sich aber um eine Wärmebehandlung mit deutlich geringerer Wärmeaktivierung handelt, als die vorangegangene zum Abbau der übermäßigen Eigenspannungen.

### BEZUGSZEICHENLISTE

- 1: Federstahldraht
- 2: Vorform
- 3: Federachse
- 4: Ende
- 5: Ende
- 6: Spanneinrichtung
- 7: Drahtende
- 8: Vorschubeinrichtung
- 9: Pfeil
- 10: Drehpfeil
- 11: Formkeil
- 12: Windung
- 13: Pfeil
- 14: Schneide
- 15: Einpressrichtung
- 16: Drehpfeil
- 17: Widerlager

## Patentansprüche

1. Verfahren zur Herstellung einer eine definiert gekrümmte Federachse aufweisenden Spiralfeder, wobei eine eine Mehrzahl von Windungen um eine gerade Federachse (3) aufweisende Vorform (2) aus Federstahldraht (1) gewunden oder gewickelt wird und wobei ein Formkeil (11) in einer Einpressrichtung (15) zwischen benachbarte Windungen der Vorform (2) eingepresst wird, um deren Federachse (3) zu krümmen, **dadurch gekennzeichnet, dass** eine Eindringtiefe des Formkeils (11) zwischen die benachbarten Windungen (12) der Vorform (2) entlang deren Federachse (3) unterschiedlich tief gewählt wird und dass der Formkeil (11) relativ zu der Vorform (2) um seine Einpressrichtung (15) verdreht wird, so dass sich seine Orientierung zu der Federachse (3) der Vorform (2) entlang deren Federachse (3) ändert.

2. Verfahren nach Anspruch 1, **dadurch gekennzeichnet, dass** die Eindringtiefe des Formkeils (11) vor den Enden (4, 5) der Vorform (2) anders gewählt wird als in ihrem Mittelbereich.

3. Verfahren nach Anspruch 1 oder 2, **dadurch gekennzeichnet, dass** die Vorform (2) relativ zu dem Formkeil (11) um ihre Federachse (3) verdreht wird, so dass sich die Einpressrichtung (15), unter der der Formkeil (11) zwischen die Windungen (12) der Vorform (3) eingepresst wird, entlang deren Federachse (3) ändert.

4. Verfahren nach einem der Ansprüche 1 bis 3, **dadurch gekennzeichnet, dass** die Einpressrichtung (15), unter der der Formkeil (11) zwischen die Windungen (12) der Vorform (3) eingepresst wird, relativ zu dem Drahtende (7) des Federstahldrahts (1) an dem Ende (5) definiert wird, an dem die Vorform (2) während des Einpressens des Formkeils (11) gehalten wird.

5. Verfahren nach einem der Ansprüche 1 bis 4, **dadurch gekennzeichnet, dass** die Federachse (3) der Vorform (2) derart gekrümmt wird, dass die Federachse (3) bei einer anschließenden Wärmebehandlung ohne Einwirkung äußerer Kräfte die gewünschte definierte Krümmung der Spiralfeder einnimmt.

6. Verfahren nach Anspruch 5, **dadurch gekennzeichnet, dass** die Federachse (3) der Vorform (2) derart dreidimensional gekrümmt wird, dass die Federachse (3) bei einer anschließenden Wärmebehandlung ohne Einwirkung äußerer Kräfte eine ebene Kreisbogenform mit definiertem Radius einnimmt.

7. Verfahren nach Anspruch 5 oder 6, **dadurch gekennzeichnet, dass** keine weitere Wärmebehandlung nach dem Winden oder Wickeln der Vorform (2) erfolgt.

8. Vorrichtung zur Durchführung des Verfahrens nach einem der Ansprüche 1 bis 7 mit einem Formkeil (11), der mit einem Aktuator in einer Einpressrichtung (15) in Hüben gegen ein Widerlager (17) für die Vorform (2) verfahrbar ist, und mit einer Vorschubeinrichtung (8) für die Vorform (2), die eine ein Ende (5) der Vorform (2) fixierende Spanneinrichtung (6) aufweist und die die Spanneinrichtung (6) zwischen den Hüben des Aktuators vorschiebt, **dadurch gekennzeichnet, dass** der Aktuator so angesteuert wird, dass der Formkeil (11) über hubweise unterschiedliche Hubtiefen verfahren wird, so dass eine Eindringtiefe des Formkeils (11) zwischen benachbarte Windungen (12) der eine Mehrzahl von Windungen (12) um eine gerade Federachse (3) aufweisenden Vorform (2) aus Federstahldraht (1) entlang deren Federachse (3) unterschiedlich tief gewählt wird, und dass der Formkeil (11) hubweise um seine Einpressrichtung so verdrehbar ist, dass sich seine Orientierung zu der Federachse (3) der Vorform (2) entlang deren Federachse (3) ändert.

9. Vorrichtung nach Anspruch 8, **dadurch gekennzeichnet, dass** der Formkeil (11) mit einem Drehantrieb hubweise um seine Einpressrichtung verdrehbar ist.

10. Vorrichtung nach Anspruch 8 oder 9, **dadurch gekennzeichnet, dass** die Spanneinrichtung (6) der Vorschubeinrichtung (8) mit einem Drehantrieb hubweise um die Federachse (3) der Vorform (2) verdrehbar ist.

11. Vorrichtung nach einem der Ansprüche 8 bis 10, **dadurch gekennzeichnet, dass** die Spanneinrichtung (6) die Vorform (2) anhand der Lage des Drahtendes (7) an ihrem fixierten Ende (5) um ihre Federachse (3) ausrichtet.

## Claims

1. Method for manufacturing a helical spring having a spring axis with a defined curvature, a preform having a plurality of windings about a straight spring axis being coiled or wound of steel spring wire, and a form wedge being pressed between adjacent windings of the preform to bend its spring axis, **characterized in that** a penetration depth of the form wedge (11) between the adjacent windings (12) of the preform (2) is selected differently along the spring axis (3), and that the form wedge (11) is turned about its pressing direction (15) with regard to the preform so that its orientation with regard to the spring axis (3) of the preform (2) changes along the spring axis (3) of the preform (2).

2. Method according to claim 1, **characterized in that** the penetration depth of the form wedge (11) is selected differently in front of the ends (4, 5) of the preform (2) as compared to its middle area.

3. Method according to claim 1 or 2, **characterized in that** the preform (2) is turned about its spring axis (3) with regard to the form wedge (11) so that the pressing direction (15) at which the form wedge (11) is pressed between the windings (12) of the preform (2) changes along the spring axis (3) of the preform (2).

4. Method according to any of the claims 1 to 3, **characterized in that** the pressing direction (15) at which the form wedge (11) is pressed between the windings (12) of the preform (2) is defined with regard to the wire end (7) of the steel spring wire (1) at that end (5) at which the preform (2) is held during pressing the form wedge (11).

5. Method according to any of the claims 1 to 4, **characterized in that** the spring axis (3) of the preform (2) is bent in such a way that the spring axis (3) sets into the desired defined curvature of the helical spring during a subsequent heat treatment without influence of outer forces.

6. Method according to claim 5, **characterized in that** the spring axis (3) of the preform (2) is three-dimensionally bent in such a way that the spring axis (3) sets into a plane arc-shaped form with a defined radius during a subsequent heat treatment without influence of outer forces.

7. Method according to claim 5 or 6, **characterized in that** no further heat treatment takes place after winding or coiling the preform (2).

8. Apparatus for carrying out the method according to any of the claims 1 to 7 having a form wedge which is movable with an actuator in a pressing direction in strokes against an abutment for the preform, and having a feeding device for the preform which has a clamping device fixing one end of the preform and which forwards the clamping device between the strokes of the actuator, **characterized in that** the actuator is operatable to move the form wedge (11) in different stroke depths stroke by stroke so that a penetration depth of the form wedge (11) between adjacent windings (12) of the preform (2) having a plurality of windings (12) about a straight spring axis (3) is selected differently along the spring axis (3), and that the form wedge (11) is turnable about its pressing direction (15) stroke by stroke so that its orientation with regard to the spring axis (3) of the preform (2) changes along the spring axis (3) of the preform (2).

9. Device according to claim 8, **characterized in that** the form wedge (11) is turnable by a rotation drive about its pressing direction stroke by stroke.

10. Device according to claim 8 or 9, **characterized in that** the clamping device (6) of the feeding device (8) is turnable about the spring axis (3) of the preform (2) by a rotation drive stroke by stroke.

11. Device according to any of the claims 8 to 10, **characterized in that** the clamping device (6) orients the preform (2) about its spring axis (3) means of the position of the wire end (7) at the fixed end (5) of the preform (2).

## Revendications

1. Procédé de fabrication d'un ressort spiral présentant un axe de ressort d'une courbure déterminée, dans lequel une pluralité de spires est bobinée ou est enroulée autour d'une préforme (2) en fil d'acier à ressort (1) présentant un axe de ressort (3) droit et dans lequel un coin de formage (11) est enfoncé dans une direction d'enfoncement (15) entre des spires voisines de la préforme (2) pour courber l'axe de ressort (3), **caractérisé en ce que** la profondeur d'enfoncement du coin de formage (11) entre les spires voisines (12) de la préforme (2) est choisie de profondeurs différentes le long de son axe de ressort (3) et **en ce que** le coin de formage (11) est tourné par rapport à la préforme (2) autour de sa direction d'enfoncement (15), de telle sorte que son orientation par rapport à l'axe de ressort (3) de la préforme (2) varie le long de son axe de ressort (3).

2. Procédé selon la revendication 1, **caractérisé en ce que** la profondeur de pénétration du coin de formage (11) avant les extrémités (4, 5) de la préforme (2) est choisie différente de ce qu'elle est dans sa zone moyenne.

3. Procédé selon la revendication 1 ou 2, **caractérisé en ce que** la préforme (2) est tournée autour de son axe de ressort (3) par rapport au coin de formage (11), de telle sorte que la direction d'enfoncement (15) sous laquelle le coin de formage (11) est enfoncé entre les spires (12) de la préforme (2) varie le long de l'axe de ressort (3).

4. Procédé selon l'une des revendications 1 à 3, **caractérisé en ce que** la direction d'enfoncement (15) sous laquelle le coin de formage (11) est enfoncé entre les spires (12) de la préforme (2) est définie par rapport à l'extrémité du fil (7) du fil d'acier à ressort (1) à l'extrémité (5) à laquelle la préforme (2) est maintenue pendant l'enfoncement du coin de formage (11).

5. Procédé selon l'une des revendications 1 à 4, **caractérisé en ce que** l'axe de ressort (3) de la préforme (2) est courbé de telle sorte que, lors d'un traitement thermique ultérieur, l'axe de ressort (3) prend la courbure définie désirée du ressort spiral sans l'action de forces extérieures.

6. Procédé selon la revendication 5, **caractérisé en ce que** l'axe de ressort (3) de la préforme (2) est courbé en trois dimensions de telle sorte que, lors d'un traitement thermique ultérieur, l'axe de ressort (3) prend une forme d'arc de cercle plan d'un rayon défini sans l'action de forces extérieures.

7. Procédé selon la revendication 5 ou 6, **caractérisé en ce qu'**il ne s'effectue pas d'autre traitement thermique après le bobinage ou l'enroulement de la préforme (2).

8. Dispositif pour la mise en oeuvre du procédé selon l'une des revendications 1 à 7 avec un coin de formage (11), qui peut être déplacé par courses par un actionneur dans une direction d'enfoncement (15) contre un contre-appui (17) pour la préforme (2), et avec un dispositif d'avance (8) pour la préforme (2), qui comporte un dispositif de tension (6) qui fixe une extrémité (5) de la préforme (2), et qui pousse le dispositif de tension (6) en avant entre les courses de l'actionneur, **caractérisé en ce que** l'actionneur est commandé de telle sorte que le coin de formage (11) est déplacé sur des profondeurs de course différentes de course en course, de telle sorte qu'une profondeur de pénétration du coin de formage (11) entre des spires voisines (12) de la préforme (2) en fil d'acier à ressort (1) présentant une pluralité de spires (12) autour d'un axe de ressort (3) droit, est choisie de profondeur variable le long de son axe de ressort (3), et **en ce que** le coin de formage (11) peut être tourné de course en course autour de sa direction d'enfoncement de telle sorte que son orientation par rapport à l'axe de ressort (3) de la préforme (2) varie le long de son axe de ressort (3).

9. Dispositif selon la revendication 8, **caractérisé en ce que** le coin de formage (11) peut être tourné de course en course autour de sa direction d'enfoncement par un entraînement en rotation.

10. Dispositif selon la revendication 8 ou 9, **caractérisé en ce que** le dispositif de tension (6) du dispositif d'avance (8) peut être tourné de course en course autour de l'axe de ressort (3) de la préforme (2) par un entraînement en rotation.

11. Dispositif selon l'une des revendications 8 à 10, **caractérisé en ce que** le dispositif de tension (6) oriente la préforme (2) autour de son axe de ressort (3) d'après la position de l'extrémité du fil (7) à son extrémité fixée (5).
